# EUROPÄISCHE PATENTANMELDUNG

(11) **EP 4 339 576 A2**
(43) Veröffentlichungstag der Anmeldung: **20.03.2024**
(21) Anmeldenummer: 23191353.4
(22) Anmeldetag: 14.08.2023
(51) Int. Cl.: G01M 3/22, F28F 27/00

(54) **VERFAHREN UND PRÜFEINRICHTUNG ZUR ERKENNUNG VON LECKAGEN**

(30) Priorität: 13.09.2022 DE 102022123313
(71) Anmelder: Kassubek, Yannik, 31020 Salzhemmendorf (DE)
(72) Erfinder: Kassubek, Yannik, 31020 Salzhemmendorf (DE)
(74) Vertreter: Gerstein, Hans Joachim

(57) **Zusammenfassung**

Die vorliegende Erfindung offenbart ein Verfahren zur Erkennung von Leckagen in einem Wärmetauscher (1), der eine erste Fluidzirkulationsseite und eine davon zur Verhinderung eines Flüssigkeitsaustauschs getrennte zweite Fluidzirkulationsseite hat, wobei ein mit einem Tracer versehenes Fluid auf einer der Fluidzirkulationsseiten in einem Indikator-Kreislauf der Geberseite zirkuliert und auf der anderen Fluidzirkulationsseite gemessen wird, ob der Tracer dort auf der Detektionsseite im Detektions-Kreislauf detektierbar ist.

## Beschreibung

Die Erfindung betrifft ein Verfahren zur Erkennung von Leckagen in einem Wärmetauscher, der eine erste Fluidzirkulationsseite und eine davon zur Verhinderung eines Flüssigkeitsaustauschs getrennte zweite Fluidzirkulationsseite hat, wobei ein mit einem Tracer versehenes Fluid auf einer der Fluidzirkulationsseiten in einem Indikator-Kreislauf der Geberseite zirkuliert und auf der anderen Fluidzirkulationsseite gemessen wird, ob der Tracer dort auf der Detektionsseite im Detektions-Kreislauf detektierbar ist.

Die Erfindung betrifft weiterhin eine Prüfeinrichtung zur Erkennung von Leckagen in einem Wärmetauscher mit einer ersten Pumpe, die zur Fluidzirkulation an einen Eingang und Ausgang einer ersten Fluidzirkulationsseite eines Wärmetauschers anschließbar ist, und mit einer zweiten Pumpe, die mit einem Eingang und Ausgang einer zweiten Fluidzirkulationsseite des Wärmetausches verbindbar ist, und mit mindestens einem Sensor zur Detektion von Tracer in einem Fluid, der in ein Fluid auf einer der Fluidzirkulationsseiten aus einem Fluid mit Tracer enthaltenden Prüfmittel der andern Fluidzirkulationsseite übergetreten ist,

Die Erkennung von Leckagen in einem Wärmetauscher durch Einfügen eines Tracers auf einer Geberseite und Messen der Anwesenheit des Tracers auf der gegenüberliegenden Seite des Wärmetauschers ist bspw. in WO 01/42756 A1 beschrieben.

US 5,416,323 A schlägt eine Fluoreszenzanalyse zur Detektion der Signaturkomponente im Fluid als Tracer vor. Dabei wurden unterschiedliche Flüssigkeiten auf der Geberseite und der Detektionsseite eingesetzt. Hierbei können auch normale Fluidkomponenten des genutzten Prozess-Fluids verwendet werden, wobei auf der Detektionsseite dann reines Wasser eingesetzt wird.

Die Reinigung der Wärmetauscher nach Durchführung einer Leckagemessung ist aufwendig. Der Tracer kann an den Wänden des Wärmetauschers anhaften und später insbesondere bei hochreinen Prozessen, wie in der Lebensmittelverarbeitung, Probleme verursachen. Zudem ist die zuverlässige Erkennung von Leckagen und deren Lokalisierung eine Herausforderung.

Ausgehend hiervon ist es Aufgabe der vorliegenden Erfindung, ein verbessertes Verfahren zur Erkennung von Leckagen in einem Wärmetauscher zu schaffen.

Die Aufgabe wird mit dem Verfahren mit den Merkmalen des Anspruchs 1 und 4 gelöst. Vorteilhafte Ausführungsformen sind in den Unteransprüchen beschrieben.

Es wird vorgeschlagen, als Tracer Phycocyanin oder Riboflavin einzusetzen.

Diese Substanzen sind durch ihre fluoreszierenden Eigenschaften auch in kleinsten Mengen zuverlässig detektierbar. Sie sind nicht giftig und lebensmittelverträglich, sodass etwaige verbleibende Restmengen für einen nachfolgenden Produktionsprozess unkritisch sind. Phycocyanin und Riboflavin haben zudem die Eigenschaft, nicht an Oberflächen anzuhaften. Diese Tracer verbleiben vielmehr in gelöster Form im Fluid, sodass sie nach Austausch des Fluids bereits im Wesentlichen vollständig aus dem Wärmetauscherkreislauf entfernt sind. Dann kann die Nachspülung zur Reinigung der inneren Rohrwände des Wärmetauschers und der zugehörigen Rohrleitung verhältnismäßig kurz ohne übermäßigen Aufwand durchgeführt werden, um ein vollständiges Entfernen des Tracers sicherzustellen.

Mit dem Verfahren kann die Leckageprüfung von Wärmetauschern verschiedener Bauarten zerstörungsfrei und zuverlässig durchgeführt werden, um hygienische Risiken aufzufinden und zu lokalisieren, welche durch mechanische Mängel entstehen. Dabei wird geprüft, ob die produktberührenden Bauteile die Anforderungen für eine sichere Verwendung insbesondere in der Lebensmittelindustrie erfüllen. Dies ist nicht der Fall, wenn ein Übertritt zwischen der Primärseite auf die Sekundärseite des Wärmetauschers und umgekehrt durch kleinste Leckagen erfolgen kann.

Mit dem Ergebnis der Erkennung von Leckagen wird der aktuelle Stand der geprüften Bauteile dokumentiert und es kann eine Empfehlung von Reparatur- und Korrekturmaßnahmen erfolgen. Das Verfahren kann auch nach einer erfolgten Durchführung einer Reparatur genutzt werden, um die Qualität der Reparatur zu prüfen und zu dokumentieren.

Als Trägerflüssigkeit für den Tracer kann insbesondere Wasser genutzt werden. Vorzugsweise wird reines Wasser, wie bspw. destilliertes Wasser, eingesetzt. Dieser Trägerflüssigkeit wird dann ein durch eine photometrische Messsonde messbarer Indikator (Tracer) hinzugefügt. Als Tracer wird Phycocyanin oder Riboflavin eingesetzt, dass der Trägerflüssigkeit (Wasser) zugegeben wird. Das durch Zugabe des Indikators gewonnene Prüfmedium ersetzt während des Prüfvorgangs das während der Produktion eingesetzte Medium vollständig.

Das Fluid auf der Detektionsseite kann ebenfalls Wasser, dann allerdings ohne Zusatz eines Tracers sein.

Die Erkennung von Leckagen mit einem aus Trägerflüssigkeit und Tracer gebildeten Prüfmedium auf der Geberseite des Wärmetauschers und einem Fluid ohne Tracer auf der gegenüberliegenden Detektionsseite des Wärmetausches kann die folgenden Schritte haben:
a) Pumpen des mit dem Tracer versehenden Fluids als Prüfmedium im Indikator-Kreislauf im Kreis, sodass das Prüfmedium auf der Geberseite des Wärmetauschers zirkuliert, wobei das Fluid auf der Detektionsseite des Wärmetauschers unbewegt bleibt;
b) Wiederholen des Schrittes a) mit Druckwechseln durch Variation der Druckdifferenzen zwischen der Geberseite und der Detektionsseite und mit Druckhaltephasen zwischen Druckwechseln;
c) Pumpen des Fluids auf der Detektionsseite nach Abschluss der wiederholten Schrittfolgen a) und b), wobei das Prüfmedium ohne eine Druckdifferenz zur Detektionsseite weiterzirkuliert, und
d) Messen der Anwesenheit des Tracers im Fluid auf der Detektionsseite, wobei eine Leckage erkannt wird, wenn Tracer auf der Detektionsseite detektiert wird.

Damit wird das Prüfmedium (Fluid/Wasser + Indikator) auf einer Seite des geschlossenen Wärmetauschers im sogenannten Indikator-Kreislauf eingesetzt. Die baulich getrennte Gegenseite des Wärmetauschers ist für diese Messphase mit einem Fluid ohne Tracer (Indikator), wie bspw. mit unbehandeltem reinem Wasser, gefüllt und geschlossen. Das Fluid in diesem Detektions-Kreislauf auf der Detektionsseite befindet sich nicht in Bewegung. Im Indikator-Kreislauf wird das Prüfmedium hingegen mit Hilfe einer Pumpe gepumpt, sodass es nach Öffnen eines Rücklaufs im Indikator-Kreislauf zirkulieren kann. Der mit dem notwendigen Sensor und Messtechnik zur Detektion der Anwesenheit des Tracers im Fluid versehende Detektier-Kreislauf bleibt weiterhin unbewegt. Es wird ein vorgegebenes Prüfprogramm durchlaufen, das aus Druckwechseln sowie Druckhaltephasen im Indikator-Kreislauf besteht.

Dabei ist es von Vorteil, wenn der Druckunterschied zwischen dem Indikator- und Detektier-Kreislauf mindestens 3 Bar beträgt. Damit ist in jeden Fall sichergestellt, dass kleinste Mengen des Prüfmediums einschließlich des Tracers durch vorhandene Leckageströme und später durch den Sensor im Detektier-Kreislauf gemessen werden können.

Nach erfolgreichem Durchlauf des Prüfprogramms wird das Prüfmedium im Indikator-Kreislauf drucklos weiterzirkuliert. Anschließend wird das Fluid im bis dahin unbewegten Detektier-Kreislauf über den Sensor im Kreis bewegt. Damit wird die Anwesenheit von durch Leckagen in den Detektier-Kreislauf gelangten Mengen von Tracer auf der Detektionsseite durch Messung des vollständigen Fluidvolumens auf der Detektionsseite ermittelt, indem das Fluid durch Zirkulation an dem Sensor vorbei strömt.

Diese Zirkulation erfolgt allerdings erst nach Abschluss der wiederholten Druckwechsel und Druckhaltephasen auf der Geberseite.

Dies hat den Vorteil, dass ein während dieser Prüfphase in den Detektions-Kreislauf übergetretenes Prüfmittel, das den Tracer enthält, an der Übertrittstelle auf der Detektionsseite verbleibt. Erst mit der Prüfphase durch die Druckwechsel- und Druckhaltephasen werden unterschiedliche Prozesszustände erzwungen, durch die ein Übertritt auch bei kleinsten Leckagen erfolgt. Dadurch, dass die Zirkulation erst nach dem Abschluss der Prüfphase durchgeführt wird, kann der Ort der Leckagen zumindest annähernd bestimmt werden. Dieser ergibt sich aus dem sich nach Zirkulation bewegenden, übergetretenen Traceranteil im Fluid der Detektionsseite und der Zirkulationsgeschwindigkeit des Fluids auf der Detektionsseite bis zum Eintreffen an dem Sensor.

Durch das während der Prüfphase unbewegte Fluid im Detektier-Kreislauf wird somit ein definierter Ausgangszustand für eine nachfolgende Detektionsphase geschaffen.

Nach Abschluss der Prüfphase kann in der Detektionsphase im Schritt c) das Fluid im Detektions-Kreislauf zunächst ohne eine Zirkulation durch Schließen eines Rücklaufs im Detektions-Kreislauf auf der Detektionsseite geprüft werden. Hierdurch wird der Druck des Fluid auf der Detektionsseite erhöht. Nach Erreichen eines vorgegebenen Soll-Drucks wird dann der Rücklauf im Detektions-Kreislauf auf der Detektionsseite geöffnet. Dies führt dazu, dass das Fluid auf der Detektionsseite zirkulieren kann.

Das Öffnen des Rücklaufs mit dem dadurch entstehenden Druckabfall bildet einen Startzeitpunkt, um eine Lokalisationszeit aus der Zeitdifferenz zwischen dem Startzeitpunkt und einem Zeitpunkt einer Messung eines Anstiegs des Gehalts des Tracers in dem Fluid auf der Detektionsseite zu ermitteln. Die Position der Leckage im Wärmetauscher ergibt sich dann als Funktion der Lokalisationszeit und den geometrischen Abmessungen des Wärmetauschers.

Der Startzeitpunkt ist somit der Zeitpunkt, um den sich ein Fluid auf der Detektionsseite übergetretener Tracer zum Sensor hinbewegt. Der Abstand zwischen dem Sensor und dem Ort der Leckage ist damit proportional zu der Zeitdifferenz zwischen dem Startzeitpunkt und der Messung eines Anstiegs des Tracergehalts.

Die voraussichtliche Position einer Leckage im Wärmetauscher kann aus dem Produkt aus der Lokalisationszeit und dem Quotienten aus dem Spannmaß des Wärmetauschers und der Umlaufzeit des im Detektions-Kreislauf zirkulierenden Fluids ermittelt werden.

Für den Fall eines Röhrenwärmetauschers kann die Position einer voraussichtlichen Leckage aus dem Produkt aus der Lokationszeit und dem Quotienten aus der (gesamten) Anzahl der Röhren des Röhrenwärmetauschers und der Umlaufzeit des im Detektions-Kreislauf zirkulieren Fluids ermittelt werden.

Vorteilhaft ist es, wenn die Detektion durch Vertauschen der Geberseite und Detektionsseite nochmals wiederholt wird. Die Geberseite wird dann vorher gespült, um den Tracer zu entfernen. Anschließend wird auf der bisherigen Detektionsseite der gleiche Tracer dem Fluid hinzugefügt und die Geberseite mit Fluid ohne Tracer gefüllt.

Damit kann durch Wechsel der Seiten des Wärmetauschers auch eine Leckage zuverlässig aufgefunden werden, die nur bei Überdruck von einer Seite zu einem Übertritt führt. Zudem kann das Messergebnis aus der ersten Messphase durch wiederholte Messung von der anderen Seite des Wärmetauschers verifiziert werden.

Daher ist es sinnvoll die Wiederholung der Detektion durch Vertauschen der Geberseite und Detektionsseite auch dann vorzunehmen, wenn nach der ersten Messung bereits eine Leckage durch Übertritt von Tracern erkannt wurde. So lassen sich bspw. bei der ersten Messung nicht erkannte Leckagen zusätzlich identifizieren.

Die Erfindung wird nachfolgend anhand eines Ausführungsbeispiels mit den beigefügten Zeichnungen nähe erläutert. Es zeigen:
- Figur 1: - Skizze eines Wärmetauschers mit Geberseite und Detektionsseite, Pumpe und Sensor zur Erkennung von Leckagen;
- Figur 2: - Flussdiagramm des Verfahrens zur Erkennung von Leckagen.

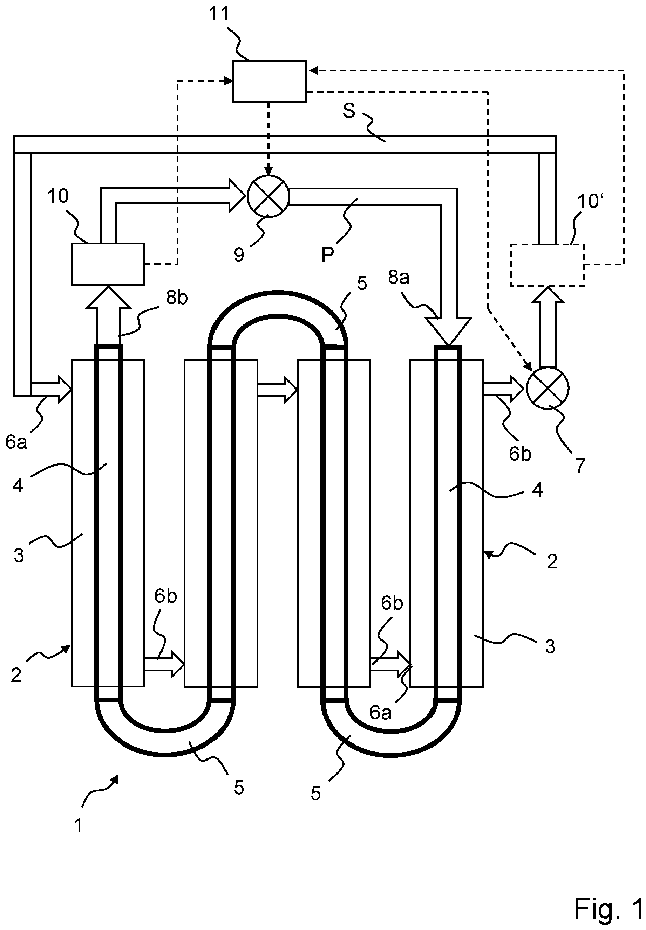

Figur 1 zeigt eine Skizze eines Wärmetauschers 1 in Form eines Röhrenwärmetauschers mit Röhren 2. Eine erste Gruppe von Röhren 3 ist auf einer Primärseite kommunizierend miteinander verbunden. Eine zweite Gruppe von Röhren 4 ist davon getrennt, aber angrenzend auf einer Sekundärseite kommunizierend miteinander verbunden.

Durch die Trennung des Primär-Kreislaufs von dem Sekundär-Kreislaufs wird ein Fluidaustausch zwischen Primär- und Sekundärseite und umgekehrt verhindert. Durch die räumliche Anordnung der Röhren der Primärseite und Sekundärseite angrenzend aneinander wird eine Wärmeübertragung zwischen Primärseite und Sekundärseite ermöglicht.

Hierdurch kann Fluid gekühlt oder aufgewärmt werden, ohne dass Fremdstoffe in den Fluidkreislauf hineingelangen und der Betriebsdruck in dem Fluidkreislauf beeinträchtigt wird.

Die Röhren 3 der ersten Gruppe des Primär-Kreislaufes sind als Außenröhren ausgeführt, durch die jeweils eine Röhre 4 der zweiten Gruppe des Sekundär-Kreislaufes hindurchgeführt wird. Dadurch bindet eine Kombination aus Außenröhre 3 und Innenröhre 4 ein Röhrenmodul 2.

Die Innenrohre 4 nebeneinander angeordneter Röhrenmodule 2 sind über ein Verbindungsrohr 5 kommunizierend miteinander verbunden. Dies kann ein gekrümmtes Rohr mit Flanschen an den Enden sein, welcher mit Flanschen des Innenrohrs 4 verschraubt wird. Hierbei kann auch eine Verbindung mit Flanschen am Außenrohr 3 erfolgen, das an den Enden jeweils nach außen und gegenüber der Ausmündung des Innenrohrs 4 abgedichtet ist.

Die Rohre 3 der ersten Gruppe des Primär-Kreislaufes P haben jeweils einen Einlass 6a und einen Auslass 6b. Der Auslass 6b eines Röhrenmoduls 2 bildet gleichzeitig den Einlass 6a des benachbarten Röhrenmoduls 2 bzw. ist mit diesem kommunizierend verbunden. Auf diese Weise kann das Fluid im Primärkreislauf 5 getrennt vom Fluid im Sekundär-Kreislauf S durch die Außenrohre 3 der nebeneinander angeordneten Rohrmodule 2 strömen. Die Strömungsrichtung kann gleichgerichtet zur Fließrichtung im Sekundär-Kreislauf sein, oder gegenläufig. Dies hängt letztendlich von der Pumprichtung ab.

Um eine Zirkulation des Fluids im Primär-Kreislauf P durch die Außenrohre 3 zu bewirken, ist eine erste Pumpe 7 kommunizierend in den Primär-Kreislauf P eingefügt.

In entsprechender Weise haben die Innenrohre 4 des Sekundär-Kreislaufes S einen Einlass 8a und einen Auslass 8b, die mit einer zwischengeschalteten zweiten Pumpe 9 und entsprechenden Rohrleitung zu einem Sekundär-Kreislauf S zusammengeschlossen sind. Auf diese Weise kann Fluid in den Sekundär-Kreislauf S durch die Innenrohre 4 des Sekundär-Kreislaufes S zirkulieren.

In den Sekundär-Kreislauf S ist ein Sensor 10 eingebaut, um einen Tracer bzw. ein Gehalt von Tracer in dem Fluid zu detektieren, das in dem Sekundär-Kreislauf S zirkuliert. Hierbei kann es sich bspw. um einen optischen Sensor zur Erkennung von Fluoreszenz des Tracers in mindestens einem ausgewählten Wellenlängenbereich handeln.

Ein entsprechender Sensor 10` kann auch in dem Primär-Kreislauf P vorhanden sein.

In dem dargestellten Ausführungsbeispiel bildet der Primär-Kreislauf P die Geberseite. Dort wird ein Tracer in Form von Phycocyanin oder Riboflavin dem Fluid hinzugefügt, um ein Prüfmedium zu bilden. Das Fluid kann bspw. Wasser, vorzugsweise reines Wasser sein.

Im Falle einer Leckage zwischen den Innenrohren 4 und den Außenrohren 3 mindestens eines Rohrmoduls 2 würde das Prüfmedium von der Primärseite P in die Sekundärseite S übertreten. Das übergetretene Prüfmittel kann dann durch Zirkulation des Fluids im Sekundär-Kreislauf S mit Hilfe des Detektors 10 erkannt werden, wenn das Fluid im Sekundär-Kreislauf S vorher nicht mit dem Tracer versetzt ist.

Die Sekundärseite bildet damit die Detektionsseite, auf der mit Hilfe des Sensors 2 der Gehalt des Tracers im Fluid im Sekundär-Kreislaufs S ermittelt und im Falle der Erkennung von Tracer auf eine Leckage geschlossen werden kann.

Hierbei kann im Gleichstrom oder Gegenstrom geprüft werden.

In dem darstellten Ausführungsbeispiel bildet die Primärseite die erste Fluidzirkulationsseite, die durch Hinzuführung von Tracer den Indikator-Kreislauf der

Geberseite bildet. Die Sekundärseite bildet den Detektions-Kreislauf und stellt die Detektionsseite dar.

Die Prüfung kann aber auch umgekehrt erfolgen, indem der Tracer dem Fluid auf der Sekundärseite S zugeführt wird. Dann erfolgt die Detektion eines Übertritts von Tracer mithilfe des Sensors 10` auf der Primärseite, die dabei den Detektions-Kreislauf mit der Detektorseite bildet.

Für den Fall des Wechselns der Prüfrichtung kann der Sensor 10 aus dem Sekundär-Kreislauf S ausgebaut und in den Primärkreislauf P eingebaut werden.

Denkbar ist aber auch eine Prüfapertur, bei dem sowohl der Sekundär-Kreislauf S als auch der Primär-Kreislauf P an die Prüfapparatur angeschlossen wird, wobei dann derselbe Sensor oder zwei Sensoren zur Detektion von Tracer sowohl im Sekundär-Kreislauf S, als auch im Primär-Kreislauf P vorhanden sind.

Die Steuerung der Zirkulation erfolgt durch eine Steuerungseinheit 11, welche die Pumpen 7, 9 ansteuert. Die Messergebnisse der Sensoren 10, 10' werden vorzugsweise dieser Steuerungseinheit 11 ebenfalls zugeführt.

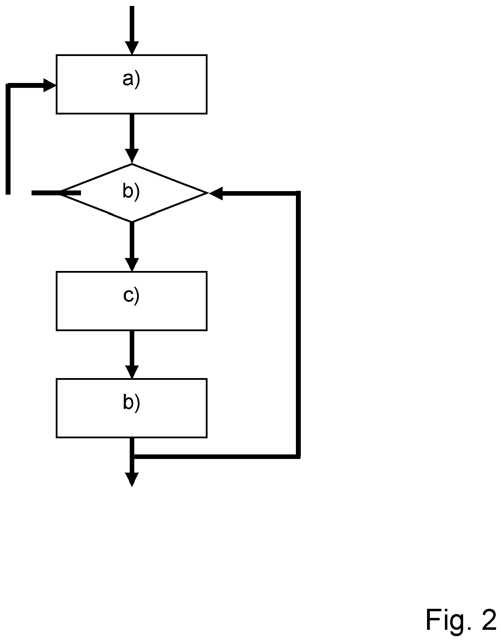

Figur 2 zeigt ein Fußdiagramm des Verfahrens zur Erkennung von Leckagen in einem Wärmetauscher 1, der eine solche erste Fluidzirkulationsseite, bspw. die Primärseite P, und eine davon zur Verhinderung eines Fluidaustausch getrennte zweite Fluidzirkulationsseite, bspw. die Sekundärseite S, hat.

Nachdem entweder die Primärseite P oder die Sekundärseite S als Indikator-Kreislauf bzw. Geberseite ausgewählt wurde, wird dem darin enthaltenden Fluid ein Tracer vorzugsweise enthaltend Phycocyanin und/oder Riboflavin zugeführt. Die andere Seite, nachfolgend als Detektionsseite bezeichnet, enthält ein Fluid ohne einen solchen Tracer.

In Schritt a) wird nun das mit dem Tracer versehene Fluid als Prüfmedium in dem Indikator-Kreislauf im Kreis gepumpt. Hierdurch zirkuliert das Prüfmedium auf der Geberseite des Wärmetauschers 1.

Während dieser Zirkulation im Indikator-Kreislauf bleibt das Fluid auf der Detektionsseite des Wärmetausches 1 unbewegt. Damit wird bei einem Übertritt von Tracer in das Fluid auf der Detektionsseite verhindert, dass sich der übergetretene Traceranteil räumlich verlagert.

Die Prüfung erfolgt durch Variation des Drucks Fluids auf der Geberseite im Schritt b) so, dass der Schritt a) mit Druckwechseln und mit Druckhaltephasen zwischen den Druckwechseln wiederholt ausgeführt wird.

Damit werden unterschiedliche Druckbelastungen zwischen Primärseite und Sekundärseite simuliert. Eine Leckage führt oftmals nur bei bestimmten Betriebsbedingungen zu einem Übertritt der Medien von einer Seite auf die andere des Wärmetauschers 1. Durch die unterschiedlichen Betriebsbedingungen wird erreicht, dass eine Leckage sicher erkannt werden kann.

Erst nach Abschluss des Prüferprotokolls durch Wiederholen der Schritte a) und b) wird in einer nachfolgenden Detektionsphase in dem Schritt c) das Fluid auf der Detektionsseite gepumpt. Dabei wird das Prüfmedium auf der Geberseite ohne eine Druckdifferenz zur Detektionsseite weiter zirkuliert. Das Prüfmedium auf der Geberseite wird somit drucklos im Fluss gehalten.

Im Schritt d) erfolgt während der Zirkulation des Fluids auf der Detektionsseite ein Messen der Anwesenheit des Tracers im Fluid auf der Detektionsseite mit Hilfe des Sensors 10, 10'. Eine Leckage wird erkannt, wenn Tracer auf der Detektionsseite detektiert wird. Hierzu kann ein Schwellwert für die Floreszenz eines optisch detektierbaren fluoreszierenden Tracers vorgegeben sein. Bei Überschreiten des Schwellwerts wird die Anwesenheit des Tracers erkannt.

Im Schritt c) kann zunächst ohne eine Zirkulation ein Druck im Detektions-Kreislauf aufgebaut werden. Hier kann ein Rücklauf bzw. Rücklaufventil im Detektions-Kreislauf zunächst geschlossen werden. Nach Erreichen eines vorgegebenen Soll-Drucks bspw. von 3 Barr wird der Rücklauf wieder geöffnet. Damit kann das Fluid auf der Detektionsseite zirkulieren.

Dieser Druckanstieg, das Öffnen des Rücklaufventils und der dadurch entstehende Druckabfall indiziert den Startzeitpunkt zur Bestimmung einer Lokalisationszeit aus der Zeitdifferenz zwischen dem Startzeitpunkt und einem Zeitpunkt einer Messung eines Anstiegs des Gehalts des Tracers in dem Fluid auf der Detektionsseite, bspw. nach Überschreiten eines Schwellwertes.

Diese Lokationszeit ist proportional zum voraussichtlichen Ort einer Leckage im Wärmetauscher 1.

Dadurch, dass während der Schritte a) und b) das Fluid im Detektions-Kreislauf nicht zirkuliert und damit unbewegt an der Stelle bleibt, verharrt eine übergetretene Tracermenge am Ort der Leckage.

Erst durch die kontrollierte Zirkulation des Fluids im Detektions-Kreislauf im Schritt c) nach Erreichen eines vorgegebenen Mindestdruck im Detektions-Kreislauf wird eine durch den Mindestdruck eine Strömung vordefinierter Strömungsgeschwindigkeit bewirkt, wodurch sich der übergetretene Traceranteil mit dem Fluid zum Sensor 10, 10` hinbewegt. Durch den vorgegebenen Druck zum Startzeitpunkt, den Druckabfall und die erzwungene Zirkulation durch Pumpen des Fluids im Detektions-Kreislauf bewegt sich der Tracer mit vordefinierter Geschwindigkeit zum Sensor 10, 10'. Damit ist die Zeitdifferenz zwischen dem Startzeitpunkt und dem Zeitpunkt einer Messung eines Anstiegs des Gehalts eines Tracers ein Maß für den sich aus der Strömungsgeschwindigkeit und der Strömungslänge ergebenden Leckageort.

Die voraussichtliche Position einer Leckage im Wärmetauscher 1 kann bspw. aus dem Produkt aus der Lokalisierungszeit und dem Quotienten aus dem Spannmaß des Wärmetauschers und der Umlaufzeit des im Detektions-Kreislauf zirkulierenden Fluids bestimmt werden.

Für den Röhrenwärmetauscher lässt sich ein defektes Rohrmodul 2 aus dem Produkt aus der Lokalisationszeit und dem Quotienten aus der gesamten Anzahl der Röhren des Röhrenwärmetauschers 1 und der Umlaufzeit des im Detektions-Kreislauf zirkulierenden Fluids ermitteln.

Das skizierte Verfahren kann durch Vertauschen der Geberseite und Detektionsseite wiederholt werden. Hierzu wird die bisherige Geberseite vorher gespült, um den dort eingeführten Tracer zu entfernen. Das Prüfmittel wird somit aus der bisherigen Geberseite entnommen und durch frisches Fluid ohne Tracer ausgetauscht, wobei zusätzlich eine Spülung für eine gewisse Zeit erforderlich sein wird.

Nun wird auf der bisherigen Detektionsseite der gleiche Tracer dem Fluid hinzugefügt, sodass die bisherige Detektionsseite nunmehr die Geberseite bildet. Die bisherige Geberseite wird hingegen mit Fluid ohne Tracer beschickt. Dann erfolgt die Messung mit einem Sensor auf der neuen Detektionsseite, die bei der ersten Messung die Geberseite war.

Diese zusätzliche Messung nach Vertauschen von Geberseite und Detektionsseite wird vorzugsweise in jedem Fall durchgeführt, auch wenn bei der ersten Messung bereits eine Leckage durch Übertritt von Tracer erkannt wurde. Durch das Vertauschen lassen sich nämlich bislang ggf. unentdeckte Leckagen erkennen, die durch eine Druckdifferenz nur von einer Seite wirksam sind.

## Patentansprüche

1. Verfahren zur Erkennung von Leckagen in einem Wärmetauscher (1), der eine erste Fluidzirkulationsseite und eine davon zur Verhinderung eines Flüssigkeitsaustauschs getrennte zweite Fluidzirkulationsseite hat, wobei ein mit einem Tracer versehendes Fluid auf einer der Fluidzirkulationsseiten in einem Indikator-Kreislauf der Geberseite zirkuliert und auf der anderen Fluidzirkulationsseite gemessen wird, ob der Tracer dort auf der Detektionsseite im Detektions-Kreislauf detektierbar ist, **dadurch gekennzeichnet, dass** als Tracer Phycocyanin oder Riboflavin eingesetzt wird.

2. Verfahren nach Anspruch 1 **dadurch gekennzeichnet, dass** das als Trägerflüssigkeit für den Tracer genutzte Fluid Wasser ist.

3. Verfahren nach Anspruch 1 oder 2, **dadurch gekennzeichnet, dass** das Fluid auf der Detektionsseite Wasser ohne Zusatz eines Tracers ist.

4. Verfahren zur Erkennung von Leckagen in einem Wärmetauscher (1), der eine erste Fluidzirkulationsseite und eine davon zur Verhinderung eines Flüssigkeitsaustauschs getrennte zweite Fluidzirkulationsseite hat, wobei ein mit einem Tracer versehendes Fluid auf einer der Fluidzirkulationsseiten in einem Indikator-Kreislauf der Geberseite zirkuliert und auf der anderen Fluidzirkulationsseite gemessen wird, ob der Tracer dort auf der Detektionsseite im Detektions-Kreislauf detektierbar ist, **gekennzeichnet durch** die Schritte:
a) Pumpen des mit dem Tracer versehenden Fluids als Prüfmedium im Indikator-Kreislauf im Kreis, sodass das Prüfmedium auf der Geberseite des Wärmetauschers (1) zirkuliert, wobei das Fluid auf der Detektionsseite des Wärmetauschers (1) unbewegt bleibt;
b) Wiederholen des Schrittes a) mit Druckwechseln durch Variation der Druckdifferenzen zwischen der Geberseite und der Detektionsseite und mit Druckhaltephasen zwischen Druckwechseln;
c) Pumpen des Fluid auf der Detektionsseite nach Abschluss der wiederholten Schrittfolgen a) und b), wobei das Prüfmedium ohne eine Druckdifferenz zur Detektionsseite weiterzirkuliert, und
d) Messen der Anwesenheit des Tracers im Fluid auf der Detektionsseite, wobei eine Leckage erkannt wird, wenn Tracer auf der Detektionsseite detektiert wird.

5. Verfahren nach Anspruch 4, **dadurch gekennzeichnet, dass** im Schritt c) zunächst ohne eine Zirkulation durch Schließen eines Rücklaufs im Detektions-Kreislaufs auf der Detektionsseite das Fluid im Detektions-Kreislauf gepumpt wird und der Rücklauf nach Erreichen eines vorgegebenen Soll-Drucks geöffnet wird, wodurch das Fluid auf der Detektionsseite zirkulieren kann.

6. Verfahren nach Anspruch 5, **dadurch gekennzeichnet, dass** das Öffnen des Rücklaufs mit dem dadurch entstehenden Druckabfall einen Startzeitpunkt bildet und eine Lokalisationszeit aus der Zeitdifferenz zwischen dem Startzeitpunkt und einem Zeitpunkt einer Messung eines Anstiegs des Gehalts des Tracers in dem Fluid auf der Detektionsseite ermittelt wird, wobei die Position der Leckage im Wärmetauscher (1) als Funktion der Lokalisationszeit aus den geometrischen Abmessungen des Wärmetauschers (1) bestimmt wird.

7. Verfahren nach Anspruch 6, **gekennzeichnet durch** Ermitteln der voraussichtlichen Position einer Leckage im Wärmetauscher (1) aus dem Produkt aus der Lokalisationszeit und dem Quotienten aus dem Spannmaß des Wärmetauschers (1) und der Umlaufzeit des im Detektions-Kreislauf zirkulierenden Fluids.

8. Verfahren nach Anspruch 6, **gekennzeichnet durch** Ermitteln einer Röhre eines Röhrenwärmetauschers, die voraussichtlich eine Leckage aufweist, aus dem Produkt aus der Lokalisationszeit und dem Quotienten der Anzahl der Röhren (2) des Röhrenwärmetauschers und der Umlaufzeit des im Detektions-Kreislauf zirkulierenden Fluides.

9. Verfahren nach einem der vorher gehenden Ansprüche, **gekennzeichnet durch** Wiederholen der Detektion durch Vertauschen der Geberseite und Detektionsseite, wobei die bisherige Geberseite vorher gespült wird, um den Tracer zu entfernen, wobei auf der bisherigen Detektionsseite der gleiche Tracer dem Fluid hinzugefügt und die bisherige Geberseite mit Fluid ohne Tracer gefüllt wird.

10. Verfahren nach einem der Ansprüche 4 bis 9, **dadurch gekennzeichnet, dass** das Tracer Phycocyanin oder Riboflavin eingesetzt wird.

11. Verfahren nach einem der Ansprüche 4 bis 10, **dadurch gekennzeichnet, dass** das als Trägerflüssigkeit für den Tracer genutzte Fluid Wasser ist.

12. Verfahren nach einem der Ansprüche 4 bis 11 **dadurch gekennzeichnet, dass** das Fluid auf der Detektionsseite Wasser ohne Zusatz eines Tracers ist.

13. Prüfeinrichtung zur Erkennung von Leckagen in einem Wärmetauscher (1) mit einer ersten Pumpe (7), die zur Fluidzirkulation an einen Eingang und Ausgang einer ersten Fluidzirkulationsseite eines Wärmetauschers (1) anschließbar ist, und mit einer zweiten Pumpe (9), die mit einem Eingang und Ausgang einer zweiten Fluidzirkulationsseite des Wärmetausches (1) verbindbar ist, und mit mindestens einem Sensor (10, 10') zur Detektion von Tracer in einem Fluid, der in ein Fluid auf einer der Fluidzirkulationsseiten aus einem Fluid mit Tracer enthaltenden Prüfmittel der andern Fluidzirkulationsseite übergetreten ist, **dadurch gekennzeichnet, dass**
die erste und zweite Pumpe (9) mit einer Steuerungseinheit (11) verbunden ist, die zur Steuerung der Verfahrensschritte a) bis d) des Verfahren nach Anspruch 4 eingerichtet ist.
